# EUROPEAN PATENT APPLICATION

(11) **EP 1 000 695 A2**
(43) Date of publication of application: **17.05.2000**
(21) Application number: 99308870.7
(22) Date of filing: 08.11.1999
(51) Int. Cl.: B23K 20/12

(54) **Indexing turret**

(30) Priority: 06.11.1998 US 187073
(71) Applicant: UNITED TECHNOLOGIES CORPORATION, Hartford, CT 06101 (US)
(72) Inventor: Rapp, Eberhard H., Deceased (US); Corsino, Salvatore, Portland, CT 06480 (US)
(74) Representative: Leckey, David Herbert

(57) **Abstract**

An indexing turret 50 for retaining a rotor disk 22, to a table 44 during friction welding of a blade thereto. The indexing turret 50 includes a base 302, a ring 306 rotatably engaged with the base 302 and being disposed upon the base 302, and a means for retaining the disk to the ring 310. The base 302 includes at least one key slot 324 on the upper surface thereof, the location of the key slot 324 allowing the disk 22 to be in the proper weld position. The ring 306 includes at least one key 336 on the lower surface thereof, the key 336 being engageable with the key slot 324. When the key 336 is within the key slot 324, the ring 306 and the attached disk second element 22 are rotationally retained. However, when the key 336 is withdrawn from the key slot 324, the ring 306 and the attached disks 22 are rotationally movable with respect to the base 302 to position the ring 306 and disk 22 to an alternative weld position.

## Description

This invention relates to friction welders, and more particularly to an indexing turret adapted to hold and position a rotor disk while friction welding a rotor blade to the disk.

Friction welding is a well-known process in which two components, moving relative to each other, are brought into contact under pressure and bonded at their interface. The motion at the weld interface may be rotational or non-rotational. Non-rotational motion includes linear, elliptical or vibratory motion. Friction welding by rotational motion typically requires at least one of the components be circular in cross-section. However, friction welding by non-rotational motion has received attention as a means of bonding components, where the weld interface of both parts is non-circular.

In non-rotational friction welding, one component is oscillated relative to the other component while a forge force is applied normal to the direction of motion. The forge force moves the components into contact, and with metal components the friction between the components generates heat and plasticizes them. Once the motion stops, the metal solidifies, thus bonding the components.

One useful application of non-rotational friction welding is fabricating integrally bladed rotors for gas turbine engines. An integrally bladed rotor is a rotor assembly wherein the rotor blades are bonded directly to the rotor disk at spaced intervals about the circumference of the disk. In this way, individually manufactured components, each with selected properties may be joined. The blades generally include a platform, an airfoil shaped midspan region extending from one side of the platform, and a stub region extending from the other side of the platform.

It will be appreciated that the conditions under which integrally bladed rotors are friction welded are stringent. In order to friction weld these components together both the blades and disk must be gripped by holders (grippers). The disks are shaped like truncated cones and their holder must have a compatible clamping mechanism. In addition, there are large forces associated with friction welding metal components. Typically, for metal components, the oscillation frequencies are less than/about 100 Hz or cycles/second, depending on the part size and shape, and the forge forces are greater than 5000 Ibs. force (22241 Newtons). Furthermore, numerous blades must be bonded to each disk within tight tolerances required for aerospace applications. Thus, the holder must clamp sufficiently to withstand these forces and hold the disk so that the final position of the blade is accurate and repeatable.

If the disk moves during welding, such movement risks damage to the friction welder. In addition, such movement risks not only misalignment of the blade being bonded, but also misalignment of every subsequently joined blade. If misalignment is significant, the integrally bladed rotor cannot enter service, and must be scrapped or undergo costly reassembly. If misalignment is insignificant, the integrally bladed rotor may enter service but may have some resulting performance losses. An improved part holder is sought, which holds the disk securely during subsequent friction welding of a rotor blade to the rotor disk.

According to the present invention an indexing turret is disclosed for retaining a second element (disk) to a forge assembly of a friction welder while at least one first element (blade) is bonded thereto. The forge assembly includes a table. The indexing turret includes a base, a ring rotatably engaged with the base and disposed thereon, and a means for retaining the disk to the ring. The base is engageable with the table, and includes at least one key slot on its upper surface. The location of the key slot causes the second element to be properly positioned for welding. The ring includes at least one key on the lower surface thereof, the key being engageable with the key slot. The means to retain the disk to the ring allows the disk to rotate when the ring rotates. When the key is within the key slot, the ring and the disk are rotationally retained, and the blade can be welded to the properly positioned disk. However, when the key is not within the key slot, the disk can be rotated, so that another blade can be welded to the disk. The indexing turret holds and positions the disk sufficiently to withstand the forces exerted by the friction welder, and holds the disk so that the final position of the blade is accurate and repeatable.

In one embodiment of the present invention, the ring further includes a radially outwardly extending shoulder and the indexing turret further includes an hydraulic lift assembly for raising and lowering the ring. When in the lowest position, the keys are within the slots, and the ring is rotationally retained. When in the raised position, the keys are outside the slots, and the ring is rotationally free. The hydraulic lift assembly is engaged with the shoulder of the ring. The indexing turret includes a plurality of rotational positions, each corresponding to the location of a weld position for each rotor blade, and the hydraulic lift assembly permits rotation of the turret between weld positions.

The invention will now be described, by way of example only, with reference to the accompanying figures, in which;

FIG. 1 a perspective view of a friction welder.

FIG. 2 is a partial perspective view of the friction welder shown in FIG. 1, with the indexing turret of the present invention disposed thereon.

FIG. 3 is a section view of an indexing turret for use with the friction welder shown in FIG. 2.

FIG. 4 is a partially cut-away, partially sectioned view of the indexing turret shown in FIG. 3, with the indexing turret in a rotationally restrained operating mode.

FIG. 5 is a partially cut-away, partially sectioned view of the indexing turret shown in FIG. 3, with the indexing turret is in a rotationally released operating mode.

FIG. 6 is a partially cut-away, partially sectioned view of a position sensing system for the indexing turret shown in FIG. 3.

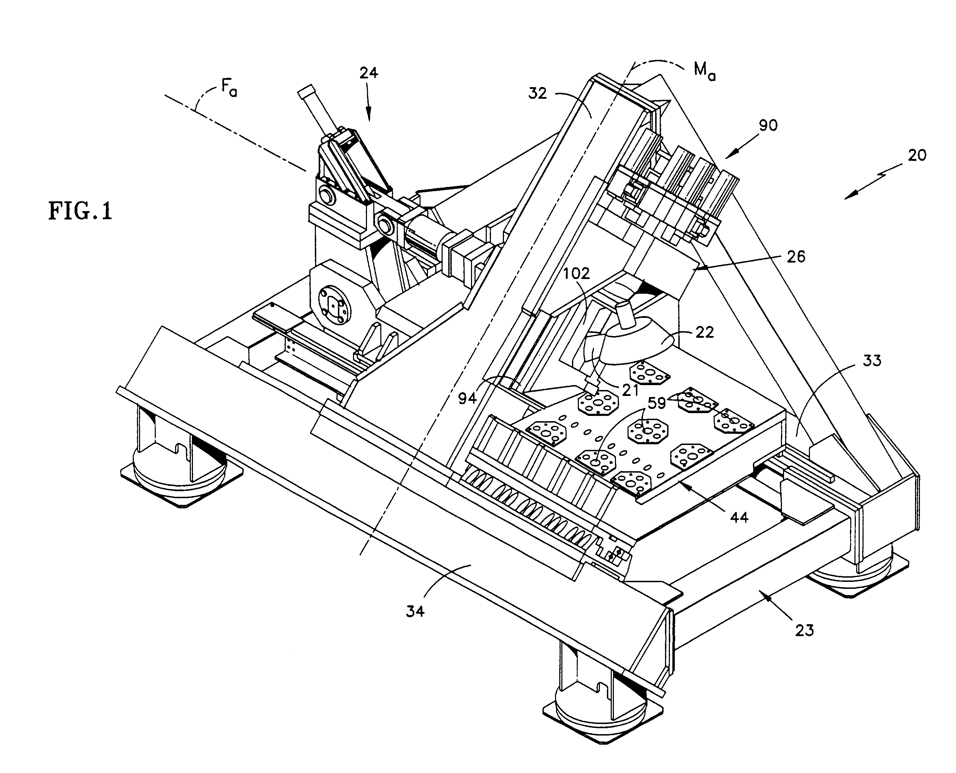

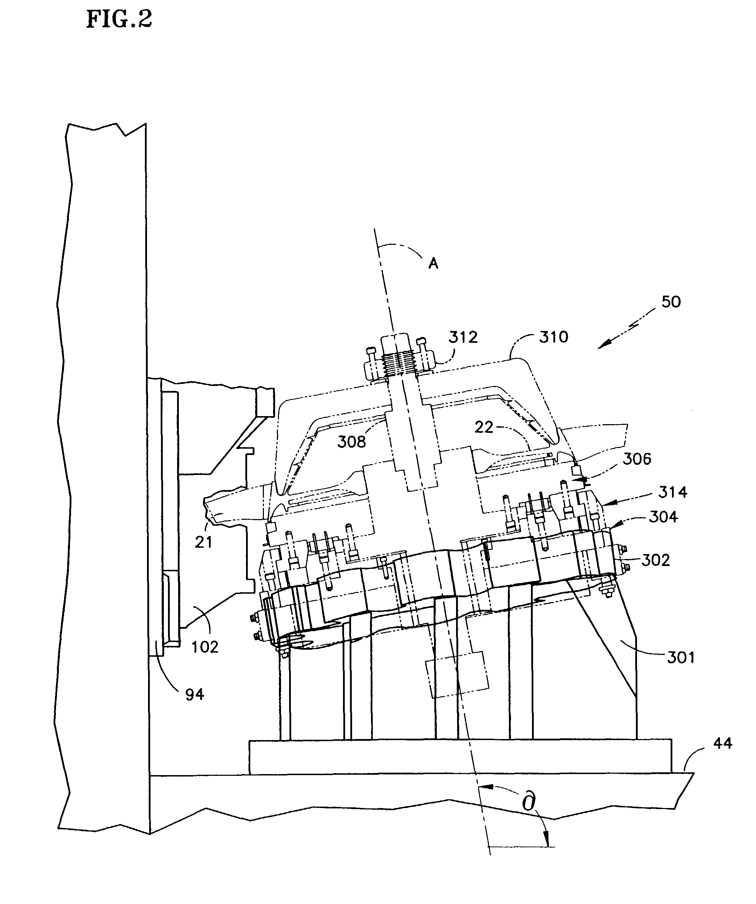

Referring to Fig. **1**, friction welder **20** is an apparatus for friction welding a first element **21** to a second element **22**. An indexing turret **50** (FIGS. 2-6) which in operation holds the second element **22** in the illustrated position has been removed for clarity. In the illustrated application, the first element **21** is a rotor blade, or airfoil and the second element **22** is a rotor disk. Once all the rotor blades are welded to the rotor disk an integrally bladed rotor is formed.

The friction welder **20** generally includes a frame **23**, a forge assembly **24**, and a reciprocal motion assembly **26**. The frame **23** includes a plurality of trusses, represented by the diagonal truss **32**, which form a pyramid-like configuration. The forge assembly **24** is supported by the frame **23** and provides a forge load along a forge axis **F**_{**a**}. The forge assembly further includes a table **44** with a plurality of bores **59** extending therethrough. The table **44** supports the indexing turret **50** (as shown in Fig. **2**). The table **44** is in a sliding relationship with the horizontal struts **33** and **34** of the frame **23**. The reciprocal motion assembly **26** is supported by the frame **23**, and is adapted to generate reciprocating motion between the blade and disk **21** and **22**, respectively. The reciprocal motion assembly **26** includes a hydraulic actuator assembly **90** and a slide **94**. The slide **94** is slidingly engaged with the diagonal truss **32** of the frame **23**. By means of the hydraulic actuator assembly **90**, the slide is made to move along the motion axis **M**_{**a**} in a linear reciprocating motion. The motion axis **M**_{**a**} is perpendicular to the forge axis **F**_{**a**}.

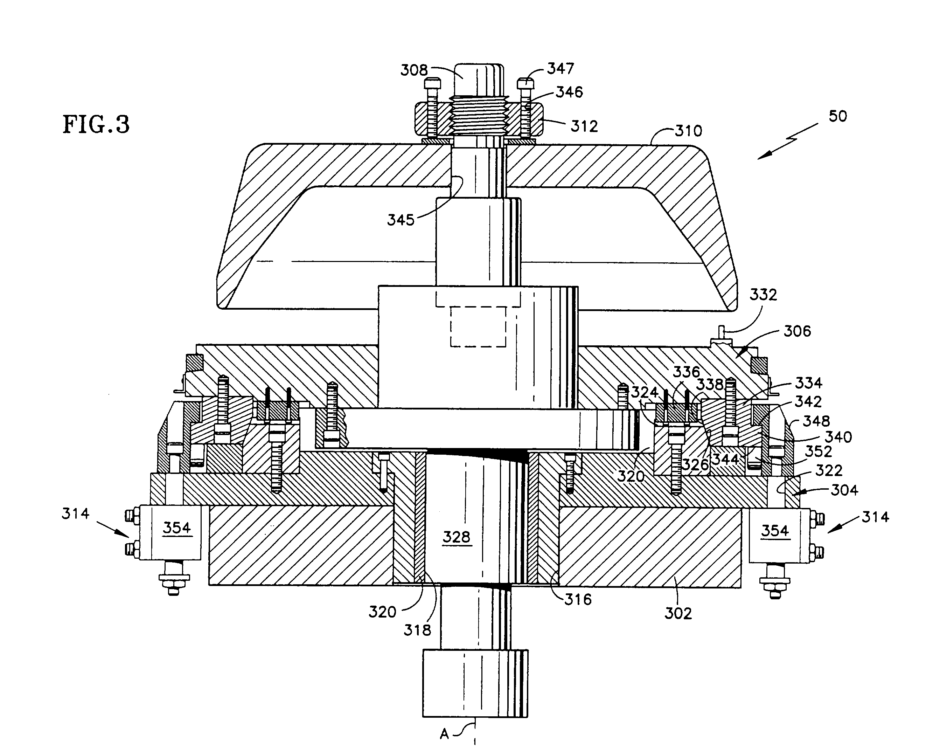

Referring to FIGS. **1** and **2**, a gripper **102** (partially cut away for clarity) is attached to the slide **94**, and holds the blade **21**, so that when the slide **94** is moved, the blade **21** also moves relative to the disk **22**. The indexing turret **50** provides retention of the disk **22** in the desired position, so that there is no relative motion between the disk **22** and the table **44**. Furthermore, the indexing turret **50** provides a means to rotate the disk **22** about an axis of rotation A, into the next weld position upon completion of a weld. The indexing turret is supported at the right height and at the right angle by a platform **301**. The platform is securely attached to the table **44**. Thus, the angle between the axis A and the table **44** is maintained at the angle **8**. The indexing turret **50** includes a base **302**, having an inner ring **304**, an outer ring **306**, a threaded shaft **308**, a clamping shell **310**, a threaded nut **312**, and a hydraulic lift assembly **314** (FIG. **3**).

Referring to FIG. **3**, the base **302** is a disk characterized by a central bore **316**. The inner ring **304** is essentially a disk, which is attached to the base **302** and is superimposed thereon. The inner ring **304** includes a centrally disposed bore **318**, a circumferentially extending ridge **320** upon ring's upper surface, and a plurality of bores **322** at spaced circumferential locations about the periphery of the inner ring. The ridge **320** is characterized by a plurality of key slots **324** in its upper surface, and a radially outward facing surface **326**. Each key slot **324** corresponds to one of the weld positions on disk **22**.

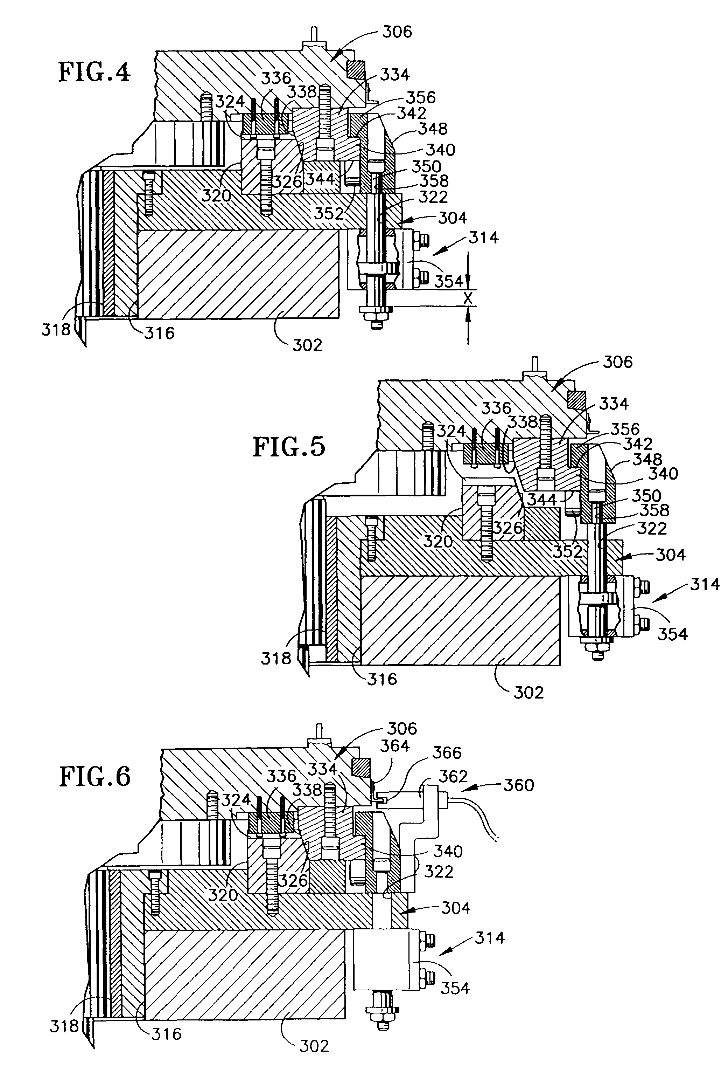

The outer ring **306** is disposed upon the inner ring **304** and includes a central spindle **328** which extends downwardly through the bores **318** and **316** in the inner ring **304** and the base **302**, respectively. Thus, the outer ring **306** is permitted to rotate with respect to base **302** about axis of rotation A. A lubricated sleeve **320** disposed between the spindle **328** and the inner ring **304** aids in allowing the rotation of the outer ring. The outer ring **306** further includes a locating pin **332** on the upper surface, a circumferentially extending ridge **334** upon the lower surface, and a pair of keys **336** radially inwardly of the ridge **334**. The ridge **334** includes a radially inwardly facing surface **338** and a radially outwardly extending shoulder **340**. The shoulder **340** is characterized by an upper surface **342** and a lower surface **344** (FIG. **4**). The plurality of keys **336** are operably engageable with the key slots **324** in the inner ring **304**. The keys **336** circumferentially locate the second element disk (as shown in FIG. **1**) into the proper weld position.

The threaded shaft **308** is rigidly attached to the upper surface of the outer ring **306** and extends upwardly therefrom. The clamping shell **310** has a bore **345**, so that upon assembly the threaded shaft **308** extends through the bore **342**. The nut **312** is threaded onto free end of the threaded shaft **308** and includes a plurality of bores **346** through which a plurality of bolts **347** extend. The threaded shaft **308**, the clamping shell **310**, and the nut **312** hold the disk **22** on the outer ring.

Referring to FIG. **4**, the hydraulic lift assembly **314** is disposed circumferentially about the outer ring **306** and is engaged with the inner ring **304**. The hydraulic lift assembly includes an annular portion **348**, a plurality of circumferentially spaced shafts or rams, represented by the shaft **350**, a plurality of followers **352**, and a plurality of hydraulic cylinders one of which is shown at **354**. The annular portion **348** includes a radially inwardly extending lip **356**, which is disposed circumferentially thereabout. The annular portion **348** further includes a plurality of circumferentially spaced bores, represented by the bore **358**, disposed therethrough. Each shaft **350** is disposed within an associated bore **358**. Each shaft **350** extends downwardly through the associated bore **358** in the inner ring **304**, and into the associated hydraulic cylinder **354**. The lip **356** engages the upper surface **342** of the outer ring shoulder **340**. The followers **352** are circumferentially spaced about and are carried by the annular portion **348**. The followers **352** are spaced apart from the lip **356**, so that the followers **352** engage the lower surface **344** of the outer ring shoulder **342**. Thus, the outer ring shoulder **342** is sandwiched between the lip **356** and the followers **352**. The followers **352** as shown are rollers that are lifted by lift **314** to elevate the outer ring **306** from the inner ring **304**, to withdraw keys **336** from slots **324**.

As illustrated in FIG. **6**, the indexing turret **50** may also include a position sensing system **360** to ensure the disk **22** (as shown in FIG. **1**) is in a proper weld position prior to energizing the force and reciprocating motion assemblies **24** and **26** respectively. The position sensing system **360** includes a light actuated switch **362** and a ring **364**. The switch **362** is mounted in any conventional manner on the annular portion **348** of the hydraulic lift assembly **314**. The switch **362** has a slot **366** adapted to accommodate the ring **364**. The ring is mounted on the outer ring **306** and extends radially outward therefrom, so that the ring **364** extends into the switch slot **366**. The ring **364** has a plurality of circumferentially spaced reflective surfaces (not shown) mounted thereon. The locations of the surfaces correspond to the weld positions on the disk **22**.

The preferred material for the indexing turret is commercially available steel with a Rockwell hardness between **40** and **45**, because of the strength, machinability, and cost.

Operation of the indexing turret **50** (as shown in Fig. **2**) will now be described. Referring to FIGS. **1** and **2**, the friction welder **20** is in an unloaded position, where the table **28** is spaced from the diagonal truss **30**. This allows access to the table **28** so that the indexing turret **50** can be attached thereto. In the unloaded position, the indexing turret **50** is secured to the platform **301**, which is secured to the table **44**. In this position the blade **21** should be loaded into the gripper **102** .

Next rotor disk **22** is mounted onto the indexing turret **50**. Referring to FIGS. **2**, **3**, and **4**, with the bolts **346**, the nut **312**, and the clamping shell **310**, removed, the disk **22** is inserted over the threaded shaft **308**. The clamping shell **310** is then passed over the shaft **308**, so that the shaft **308** extends through the bore **342** in the clamping shell. Then, nut **312** is threaded onto the threaded portion of the shaft **308**. The locating pin **332** rotationally positions the disk **22** with respect to the outer ring **306**. Nut **312** is then tightened to secure the disk **22** to the outer ring **306**. The threaded bolts **346** are engaged with the bores **344** in the nut **312**, and tightened for additional clamping force.

The indexing turret **50** is then moved from the rotationally restrained configuration (as shown in FIG. **4**) to the rotationally free mode (as shown in FIG. **5**). This is accomplished by actuating the hydraulic lift assembly **314**. Upon actuation of the hydraulic cylinder **354**, the shaft **350** moves upward, causing the annular portion **348** to move upward. As a result, the follower **352** causes the outer ring **306** to move upwardly and the keys **336** to disengage from the slots **324**. Thus, the outer ring **306** is free to be rotated. The outer ring **306** is rotated on the followers **352**, and due to the attachment with threaded shaft **308** (as shown in FIG. **1**) the disk **22** is rotated to its next indexed position.

Referring to FIG. **6**, when a reflective surface on the ring **364** is positioned within the slot **366** of the switch **362** on associated circuit is closed to indicate proper positioning, so that the keys **336**, are in the proper position above the slots **324** prior to lowering the outer ring. When the circuit is closed, the bonding surfaces of the two blade **21** and disk **22** are aligned with the forge axis **Fa** (as shown in FIG. **1**) If the disk **22** is improperly positioned, none of the reflective surfaces are positioned within the slot of the switch and the circuit remains open to indicate improper positioning.

Once disk **22** is properly positioned, the hydraulic lift assembly **314** is actuated again, so that shaft **350** moves downwardly. Referring to FIG. **5**, the lip **356** which is in contact with the upper surface **342** of the shoulder **340**, forces the outer ring **306** downwardly until the keys **336** are received within the slots **324** (as shown in FIG. **4**). The inward facing surface **326** and the outward facing surface **338** mate so that the surfaces lock. Referring to Fig. **3**, nut **312** is then tightened to secure the disk (not shown) to the outer ring **306**. The threaded bolts **346** are tightened to clamp down on disk **22**.

Now referring to FIG. **1**, the friction welding process starts with the application of an initial forge load by the forge assembly **24**, and then activation of the reciprocal motion assembly **26**, or the reciprocal motion may be initiated prior to application of any forge load. Either way, desired forge load and oscillating frequencies may be applied via the forge assembly **24** and the reciprocating motion assembly **26**.

The forge load is directed along the forge axis **F**_{**a**} normal to motion axis **M**_{**a**}. The forge load is applied by moving the disk **22** into contact with the blade **21**. Oscillation of the blade **21** is achieved by activation of the hydraulic actuator assembly **90**. This causes the slide **94**, gripper **102**, and the blade **21** to reciprocate along the motion axis **M**_{**a**}. During oscillation of the blade **21**, the disk **22** is held stationary.

The application of the forge load and reciprocating load causes the bonding surfaces of the blade and disk **21** and **22** to heat up due to friction which plasticizes the metal components which are then joined by the forge load. Upon completion of the friction weld, while the friction welder is in the loaded position, the disk is freed from the gripper **102**, so that when the forge assembly **24** is actuated, the table moves and the disk **22** moves away from the diagonal truss **31**, pulling the blade **21** now welded to the disk **22**, out of the gripper **102**. In order to weld subsequent blades **21** to the disks **22**, the disks must be rotationally released, rotated and rotationally constrained as discussed above.

The principle advantage to the present invention is that the indexing turret holds and positions the disk sufficiently to withstand the forces exerted by the friction welder, and holds the disk so that the final position of the blade is accurate and repeatable. Another advantage is that the indexing turret allows rotation of the disk so that in the case of an integrally bladed rotor the entire rotor can be assembled without complicated and time consuming set-up.

While a particular invention has been described with reference to illustrated embodiments, various modifications of the illustrative embodiments, as well as additional embodiments of the invention, will be apparent to persons skilled in the art upon reference to this description without departing from the scope of the invention, as recited in the claims appended hereto. Accordingly, the position sensing system may be mechanical like a spring pin, which picks up a hole on the outer ring. The indexing turret may be further modified by including a sensor on the clamping shell and a reader on the frame, so that movement of the second element can be observed during welding. It is therefore contemplated that the appended claims will cover any such modifications or embodiments that fall within the scope of the invention.

## Claims

1. An indexing turret 50 for retaining a second element 22 to a forge assembly of a friction welder 20 while at least one first element 21 is bonded thereto, the forge assembly including a table 44, the turret 50 being characterized by:
a base 302 engageable with the table 44;
a ring 306 rotationally engageable with the base 302 and being disposed thereupon;
one of said base 302 and said ring 306 having at least one key slot 324, the location thereof corresponding to a weld position and the other of said base 302 and said ring 306 having at least one key 336 engageable with said key slot 324; and
means to retain the second element to the ring 306, such that when the ring 306 is rotated, the second element 22 rotates and upon mating of the key 336 with the key slot 324 the second element 22 is disposed in said weld position.

2. The indexing turret of claim 2 characterized by said retention means comprising a clamp 310.

3. The indexing turret 50 of claim 2, wherein said clamp 310 is characterized by a threaded shaft 308 attached to the upper surface of the ring 306, a shell 310 having a bore 345 through which said shaft 308 extends, such that the threaded portion of the shaft 308 extends outwardly of the bore 345, and a nut 312 engageable with the shaft 308, wherein upon insertion of the second element 22 in the turret 50, the shell 310 clamps the second element 22 down onto the ring 306 and upon sufficient engagement of the nut 312 with the shaft 308 the second element 22 is retained to the ring 306.

4. The indexing turret 50 of any preceding claim, wherein the base 302 is further characterized by a radially outward facing surface 326 and the ring 306 is further characterized by a radially inward facing surface 338, such that when the ring 306 is rotationally retained, the radially outward facing surface 326 and the radially inward facing surface 338 mate.

5. The indexing turret of any preceding claim, wherein the ring 306 is further characterized by at least one locating pin 332 extending from the upper surface of the ring 306, wherein the pin 332 extends through the second element 22 to rotationally secure the second element to the ring.

6. The indexing turret of any preceding claim, further characterized by a hydraulic lift assembly 314, the lift assembly 314, a cylinder 354 and an output shaft 350 connected between said ring 306 and said base 306 such that actuation of the cylinder 354 results in either an upward force or downward force on the shaft 350, wherein upward force on the shaft 350 urges the ring 306 upwardly to disengage the key 336 from the key slot 324, and wherein a downward force on the shaft 350 causes the lip 356 to engage the upper side of the shoulder 342 and to urge the ring 306 downward to engage the key 336 and the key slot 324.

7. The indexing turret 50 of any preceding claim wherein the indexing turret 50 is characterized by a position sensing system 360, the position sensing system including a slotted switch 362 mounted on the annular portion, a plurality of reflective surfaces connected to the ring 306 at spaced circumferential locations corresponding to weld positions of the second element 22, and a signal circuit connected to the switch, wherein with the second element 22 rotationally positioned into a weld position, one of the reflective surfaces is positioned within the slot of the switch 362 and the circuit is closed to indicate proper positioning, and wherein with the second element 22 improperly positioned, none of the reflective surfaces are positioned within the slot of the switch 362 and the circuit remains open to indicate improper positioning.

8. An indexing turret 50 for retaining a second element 22 in a friction welder while a first element is friction welded thereto, the friction welder 20 including a table 44, the turret 50 being characterized in that it includes;
a lower member 302 capable of being held in a fixed position relative to the table 44 of the friction welder
an upper member 306 capable of retaining the second element 22
one of said upper or lower members 302, 306 having at least one projection 336, the other of said upper and lower members 302, 306 having at least one recess 324
said upper member 306 being movable relative to said lower member 302 to selectively engage the at least one projection 336 within the at least one recess 324
wherein when engaged, said upper member 306 is prevented from rotating relative to the lower member 302,
and when disengaged, the upper member 306 is free to rotate relative to the lower member 306, thereby allowing the second element 22 to be rotated to a new position for subsequent welding to further elements.
